# EUROPÄISCHE PATENTSCHRIFT

(11) **EP 2 753 907 B1**
(45) Veröffentlichungstag und Bekanntmachung des Hinweises auf die Patenterteilung: **21.10.2015**
(21) Anmeldenummer: 12748149.7
(22) Anmeldetag: 02.08.2012
(51) Int. Cl.: G01L 21/34, G01L 21/30, H01J 41/06

(54) **LONISATIONS - VAKUUMMESSZELLE**
IONIZATION VACUUM MEASURING CELL
CELLULE D'IONISATION SOUS VIDE

(30) Priorität: 08.09.2011 CH 14832011
(43) Veröffentlichungstag der Anmeldung: 16.07.2014
(73) Patentinhaber: Inficon GmbH, 7310 Bad Ragaz (CH)
(72) Erfinder: ANDREAUS, Bernhard, CH-8640 Raperswil (CH)
(74) Vertreter: Troesch Scheidegger Werner AG
(86) Internationale Anmeldenummer: PCT/CH2012/000177
(87) Internationale Veröffentlichungsnummer: WO 2013/033851

(56) Entgegenhaltungen:
- EP-A1- 0 611 084
- US-A- 5 568 053

## Beschreibung

Die Erfindung bezieht sich auf eine lonisations - Vakuummesszelle gemäss dem Oberbegriff des Patentanspruches 1.

Es ist bekannt Gasdruckmesszellen für die Vakuummessung einzusetzen, welche auf dem Prinzip einer Gasentladung mit einer kalten Kathode basieren. Derartige Messzellen werden auch als Kaltkathoden - lonisationsvakuummeter oder auch als Penning - Zellen bezeichnet. Bei einer derartigen Messzelle wird zwischen zwei Elektroden (Anode, Kathode) eine hinreichend hohe Gleichspannung angelegt, wodurch eine Gasentladung gezündet und unterhalten werden kann. Der Entladungsstrom ist dann ein Mass für den zu messenden Druck.

Ein Magnetfeld, ausgebildet im Bereich der Entladungsstrecke, führt die Elektronen auf ihrem Weg von der negativen Elektrode (Kathode) zur positiven Elektrode (Anode) auf spiralartigen Bahnen wodurch die Bahn der Elektronen verlängert wird. Hierdurch wird die Trefferwahrscheinlichkeit mit den Gasteilchen erhöht und der Ionisierungsgrad verbessert. Dadurch wird erreicht, dass die Entladung über weite Druckbereiche brennen kann und sich stabil und reproduzierbar verhält.

Vakuummessgeräte, welche auf dem Prinzip der Gasentladung mit Kaltkathoden funktionieren, können grob in drei Klassen unterteilt werden, welche sich vor allem in der Konfiguration der Elektroden unterscheiden:
1. Penning - Zelle:
   Die Anode ist als ringförmiger Zylinder ausgebildet, welche den Entladungsraum umschliesst, wobei Kathodenbleche an beiden Stirnseiten des Anodenringes angeordnet sind. Die Magnetfeldlinien verlaufen parallel zur Achse des Anodenringes.
2. Magnetron - Zelle:
   Die Anode ist als Hohlzylinder ausgebildet mit einer zentralen Achse und mit der Kathode als Stab im Zentrum bzw. in der Achse angeordnet. Die Feldlinien des elektrischen Feldes verlaufen demnach radial. Die Magnetfeldlinien verlaufen parallel zur Zylinderachse.
3. Zelle mit invertierter Magnetronanordnung :
   Zylindergeometrie wie bei der Magnetron - Zelle, aber mit der Anode als stabförmige Anordnung im Zentrum und der Kathode als Hohlzylinder. Die Stirnseiten des Zylinders sind typischerweise auch auf Kathodenpotential. Wie beim Magnetron verlaufen die Magnetfeldlinien parallel zur Zylinderachse, die Feldlinien des elektrischen Feldes radial.

Der dem zu messenden Gas zugängliche Raum, der beim Invertierten Magnetron von der Kathode, beim Magnetron von der Anode umschlossen wird, wird auch als Ionisationsraum bezeichnet.

Das am meisten verwendete Design ist dasjenige des invertierten Magnetrons, da es im Allgemeinen ein stabileres Messsignal als die Penning - Zelle im Hochvakuum ergibt, die Entladung bei tiefen Drücken leichter zündet und der untere Messbereich für tiefere Drücke bis hin in den Bereich 10⁻¹¹ mbar gebracht werden kann.

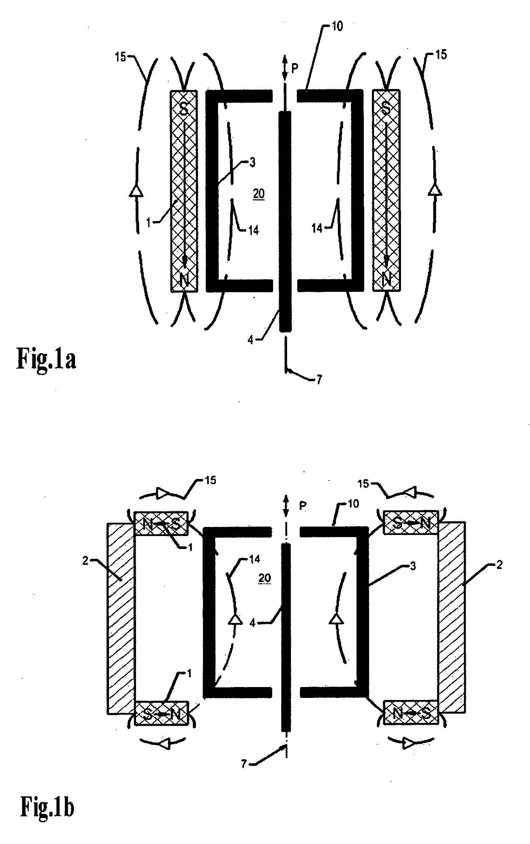

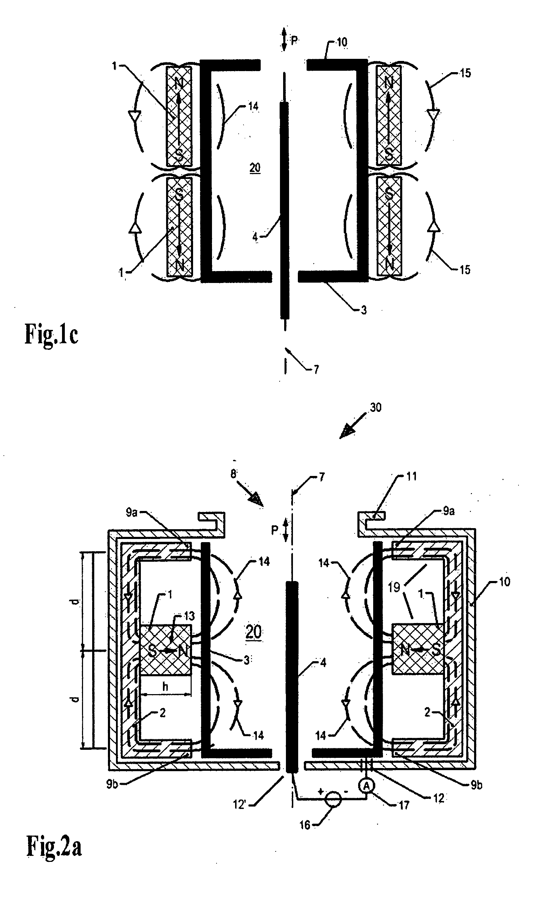

Das für die Aufrechterhaltung der Gasentladung benötigte Magnetfeld in Richtung der Zylinderachse wird in Messgeräten wegen den erforderlichen Feldstärken in der Grössenordnung von bis zu 10⁻¹ T (=1000 Gs) durch Permanentmagnete erzeugt, weil die Leistungsaufnahme von Elektromagneten zu hoch sind und diese eine grosse Bauweise bedingen würden. Folgende Magnetkonfigurationen für invertierte Magnetron - Zellen werden dabei nach dem Stand der Technik angewandt:
A) Ringmagnet mit axialer Magnetisierung, schematisch und beispielsweise dargestellt in der Figur 1a.
B) Zwei Ringmagnete mit radialer Magnetisierung, schematisch und beispielsweise dargestellt in der Figur 1 b.
C) Zwei Ringmagnete mit axialer Magnetisierung, welche mit umgekehrter Polarität zueinander stehen, schematisch und beispielsweise dargestellt in der Figur 1c.

Variante (A) ist die klassische Variante, mit dem Vorteil, dass derartige ringförmige Magnete 1 mit axialer Magnetisierung einfach und günstig in der Herstellung sind. In Kombination mit geeigneten Leitblechen aus weichmagnetischem Material lassen sich damit homogene Nutzfeldlinien 14 und hierbei magnetische Flussdichten im Ionisationsraum des Messgerätes erzielen. Die Kathode 3 ist, wie bereits erwähnt, zylinderförmig ausgebildet und schliesst den Entladungsraum bzw. eine Messkammer 20 ein. In der Achse der zylinderförmigen Kathode 3 ist die Anode 4 angeordnet. Das Ganze wird vom ringförmigen Permanentmagneten 1 mit axialer Polaritätsausrichtung zur Achse 7 umschlossen. In der Figur 1a ist der Nordpol mit N bezeichnet und der Südpol mit S. Die Polaritäten können jeweils innerhalb der Anordnung auch vertauscht werden. Stirnseitig kann die zylinderförmige Kathode, gegen die Achse 7 hin gerichtet, weitere Elektrodenflächen aufweisen, die auf demselben Potential sind und die Elektronen zusätzlich zurück in den Entladungsraum reflektieren. Der Entladungsraum weist zumindest eine Öffnung auf welche nach Aussen mit dem zu messenden Vakuumraum P kommuniziert. Typischerweise wird eine derartige Messzelle dort als lösbare Flanschverbindung ausgebildet.

Die Variante (B) weist zwei radial magnetisierte voneinander in axialer Richtung beabstandeten Ringe auf, die über ein ringförmiges Joch 2 aus weichmagnetischem Material verbunden sind für den Rückschluss des magnetischen Kreises. Im Vergleich zu Variante (A) weist die Variante (B) kleinere Streufelder 15 nach aussen hin, insbesondere in radialer Richtung, auf. Ein Teil des erzeugten Magnetfeldes 15 schliesst sich ausserhalb des Ionisationsraumes und bildet ein Streufeld 15 und dieses trägt nichts zum Nutzfeld 14 bei. Derartige äussere Streufelder 15 sind nachteilig, da diese dort befindliche Geräte und Prozesse stören können. Die Variante (B) mit dem geringeren Streufeld 15 gegen Aussen ist folglich diesbezüglich vorteilhafter. Dies bedeutet aber auch, dass für die gleichen Flussdichten im Ionisationsraum weniger Permanentmagnetmaterial verwendet werden muss.

Gemäss dem Vorschlag von Lethbridge in EP 0 611 084 A1, welche die Variante (B) offenbart, können anstatt radial magnetisierten Ringen auch Ringsegmente verwendet werden, die dann ein radial gerichtetes Feld generieren.

Variante (C) wurde von Drubetsky & Taylor, US 5,568,053, vorgeschlagen. Sie resultiert in einem Feld, das die Richtung bezüglich der Zylinderachse auf der Höhe zwischen den beiden Magnetringen ändert. Auf der Zylinderachse ist in diesem Bereich das Feld sogar null, weil sich die Flussdichten der beiden Magneten gegenseitig auslöschen. Der Vorteil dieser Anordnung ist, ein im Vergleich zur Variante (A) kleineres Streufeld bei gegebener Flussdichteanforderungen in der Messkammer. Das Streufeld ist aber immer noch nennenswert vorhanden und kann stören, vor allem wenn in der Messkammer ein starkes Nutzfeld generiert werden soll, dann wird auch das äussere Streufeld entsprechend stärker und tritt weiter in den Aussenbereich ein.

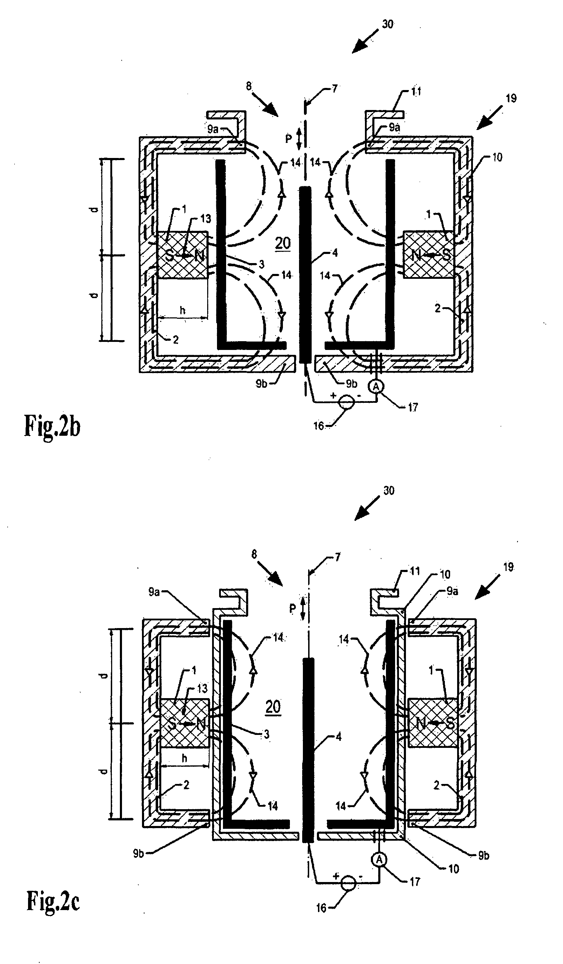

Ein Nachteil von Variante (A) sind die relativ starken Flussdichten, die bis ausserhalb der Ionisationskammer und sogar der gesamten Messzellenanordnung reichen und dort als Streufelder 15 auftreten, wie dies in der Figur 1 a dargestellt ist. Dies hat nachteilige Auswirkungen auf in der Nähe befindlichen Geräte und auf Prozesse, die bei der Art typischen Verwendung in der näheren Umgebung der Messzelle stattfindenden können, insbesondere bei Prozessen, die mit Ladungsträgern oder ionisiertem Gas betrieben werden. Mit Variante (B) werden derartige Streufelder 15 zwar verkleinert, indem ein magnetischer Schluss ausserhalb der Ionisationskammer, zwischen den beiden Ringmagneten 1, durch Anordnung eines Leitbleches 2 bzw. eines Joches aus weichmagnetischem Material gebildet wird. Es bilden sich jedoch weiterhin signifikant störende äussere Streufelder 15 aufgrund des magnetischen Nebenschlusses zwischen den Polen N, S bei jedem der beiden Ringmagnete 1, wie dies in der Figur 2b dargestellt ist.

Bei Variante (C) ist die Gasentladung durch die kleine, nicht mehr senkrecht zur elektrischen Feldachse stehende, magnetische Flussdichte im Zentrum auf der Höhe zwischen den beiden Magnetringen gering und demnach bleibt ein Teil des Messzellenvolumens ungenutzt. Zudem ergibt sich aus dem magnetischen Nebenschluss auf der Aussenseite der Magnete ein nicht vernachlässigbares störendes Streufeld 15, wie dies in der Figur 1c dargestellt ist und welches etwa ähnlich wirkt wie dies zuvor bereits zu Variante (A), gemäss der Figur 1a, erläutert worden ist.

Es ist Aufgabe der vorliegenden Erfindung, die Nachteile des Standes der Technik zu beseitigen. Insbesondere stellt sich die vorliegende Erfindung die Aufgabe, eine Magnetfeldkonfiguration für eine Kaltkathode - Ionisations - Vakuummesszelle zur Verfügung zu stellen, die eine Magnetronanordnung beinhaltet und bei welcher störende magnetische Streufelder ausserhalb der Messzelle wesentlich vermindert, oder gar im Wesentlichen ganz vermieden werden. Die Messzelle soll ausserdem einen grossen zu messenden Druckbereich erfassen können und zuverlässig und reproduzierbar arbeiten. Weiterhin soll diese kompakt und wirtschaftlich herstellbar sein.

Die Aufgabe wird bei der gattungsgemässen lonisations - Vakuummesszelle gemäss den kennzeichnenden Merkmalen des Patentanspruches 1 gelöst. Die abhängigen Patentansprüche beziehen sich auf vorteilhafte weitere Ausgestaltungen der Erfindung.

Die erfindungsgemässe Ionisations - Vakuummesszelle umfasst:
a) ein evakuierbares Gehäuse mit einem Messanschluss für das zu messende Vakuum,
b) eine erste und eine zweite Elektrode, die im wesentlichen koaxial und beabstandet zueinander angeordnet sind und mit einer gemeinsamen Achse, wodurch zwischen diesen beiden Elektroden eine Messkammer ausgebildet ist, die mit dem Messanschluss kommunizierend angeordnet ist, wobei die erste Elektrode die äussere Elektrode bildet und diese im wesentlichen eine zylindrische Fläche aufweist,
c) einer Spannungsquelle, die mit den Elektroden verbunden ist,
d) ein Strommessmittel zur Auswertung eines Entladungsstromes ausgebildet zwischen den Elektroden, wobei dieser eine Funktion des zu messenden Vakuumdruckes bildet,
e) mindestens einen Permanentmagnetring, der die koaxiale Anordnung der Elektroden umschliesst, mit im Wesentlichen radial zur Achse ausgerichteter Magnetisierungsrichtung und mit einem diesen Permanentmagnetring umschliessenden weichmagnetischen Joch,
wobei das Joch in axialer Richtung beidseitig vom Permanentmagnetring weg geführt ist und nach einem vorgegebenen Abstand d vom Permanentmagnetring auf beiden Seiten in radialer Richtung zur Achse und der ersten Elektrode hin geführt ist, wobei diese erste Elektrode die aussen liegende Elektrode der koaxialen Anordnung der Elektroden bildet, derart dass das Joch beidseitig und beabstandet vom Permanentmagnetring zwei ringförmige Pole ausbildet über welche mindestens ein Teil der Feldlinien des Permanentmagnetringes sich innerhalb der Messkammer, die erste Elektrode durchdringend, schliessen, wobei vorzugsweise ein ringförmiges tunnelartiges Magnetfeld über der ersten Elektrode innerhalb der Messkammer ausgebildet wird.

Die Anordnung mit dem Magnetsystem bildet ein Magnetron. In gewissen Fällen kann die erste, äussere Elektrode als Anode betrieben werden, wobei die zweite, innen liegende Elektrode als Kathode betrieben wird. Die weitaus bevorzugte Anordnung bildet aber ein invertiertes Magnetron. Hierbei wird die aussenliegende, erste Elektrode als Kathode betrieben und die dazu koaxial innen liegende Elektrode wird als Anode betrieben. Bei dieser Anordnung, bezeichnet als invertiertes Magnetron, ist der Entladungswirkungsgrad wesentlich besser und stabiler. Die vorzugsweise im Zentrum angeordnete Anode ist vorzugsweise stabförmig ausgebildet.

Das Magnetsystem weist im aussenliegenden Bereich somit immer weichmagnetisches Material auf. Der beidseitige magnetische Schluss zwischen den Polen verläuft über das weichmagnetische Material. Damit wird vermieden, dass das Magnetsystem nach Aussen hin ein störendes Streufeld generiert oder ein solches zumindest minimiert wird. Innerhalb der Ionisationskammer hingegen bilden sich mindestens zwei ringförmige, tunnelartige, nach innen gerichtete Magnetfeldkonfigurationen über der Fläche der ersten Elektrode mit jeweils einer axialen Komponente. Die Feldlinien gehen vom inneren Pol des mindestens einen Permanentmagneten aus nach innen und durchdringen die erste Elektrode, wobei sich diese beidseitig des Magneten über die Pole des weichmagnetischen Joches schliessen, indem sie wiederum die erste Elektrode durchdringen. Hierbei ändern die Feldlinien auf der Höhe des Magneten innerhalb der Ionisationskammer die Richtung, wodurch die beiden benachbarten tunnelartigen Felder, in ihrer Polarität, entgegengesetzt verlaufen. Dadurch entstehen mindestens zwei nebeneinander liegende ringförmige, torusartige Entladungen über der ersten Elektrode. Die darin rotierenden Elektronen pendeln, im Querschnitt betrachtet, entlang der Feldlinien seitlich hin und her und rotieren kreisförmig innerhalb der Ringe in entgegen gesetzter Richtung und bewirken durch die dadurch verlängerte Verweilzeit einen hohen Ionisierungsgrad, der typisch ist für den Magnetroneffekt bei einer gut ausgelegten Magnetronanordnung, der vorliegenden Art.

Die Erfindung wird nun anhand von Figuren schematisch und beispielsweise beschrieben.

Es zeigen:
- Fig. 1a: im Querschnitt, eine Magnetron - Ionisations - Vakuummesszelle mit einem Ringmagnet mit axialer Magnetisierung, gemäss Stand der Technik,
- Fig. 1b: im Querschnitt, eine Magnetron - Ionisations - Vakuummesszelle mit zwei in axialer Richtung voneinander beabstandeten Ringmagneten mit radialer Magnetisierung, welche ein aussen umgebendes weichmagnetisches Joch umgibt, gemäss Stand der Technik,
- Fig. 1c: im Querschnitt, eine Magnetron - Ionisations - Vakuummesszelle mit zwei Ringmagneten mit axialer Magnetisierung, die gegenpolig zueinander und aneinander anstossend positioniert sind, gemäss Stand der Technik,
- Fig. 2a: im Querschnitt eine Magnetron - Ionisations - Vakuummesszelle mit einem Ringmagnet mit radialer Magnetisierung und aussen angeordnetem umschliessenden weichmagnetischen Joch, welches beidseitig des Ringmagneten und von diesem beabstandet schenkelartige Bereiche aufweisen, die jeweils einen ringförmigen Pol bilden, die gegen eine erste Elektrode hin gerichtet sind, wobei ein Vakuumgehäuse die ganze Anordnung der Messzelle umschliesst und aufnimmt, entsprechend der vorliegenden Erfindung,
- Fig. 2b: eine weitere Ausbildung einer Vakuummesszelle, wobei das Vakuumgehäuse durch das Joch selber ausgebildet ist,
- Fig. 2c: eine weitere Ausbildung einer Vakuummesszelle, wobei das Vakuumgehäuse zwischen der ersten Elektrode und der Anordnung des Magnetsystems angeordnet ist, derart dass das Magnetsystem aus Permanentmagnet und Joch ausserhalb der Vakuumkammer liegt im Bereich von Atmosphäre,
- Fig. 2d: eine weitere Ausbildung einer Vakuummesszelle, wobei das Vakuumgehäuse gleichzeitig als erste Elektrode ausgebildet ist, derart dass das Magnetsystem aus Permanentmagnet und Joch ausserhalb der Vakuumkammer liegt im Bereich von Atmosphäre,
- Fig. 2e: eine weitere Ausbildung einer Vakuummesszelle, wobei die schenkelartigen Bereiche mit den Polen gebogen gegen die erste Elektrode hin geführt werden,
- Fig. 3: im Querschnitt eine weitere Ausbildung einer Vakuummesszelle, wobei im zentralen Bereich der Messzelle über den Polen des Joches und / oder dem Pol des Ringmagneten weichmagnetische Leitmittel angeordnet sind,
- Fig. 4: im Querschnitt eine weitere Ausbildung einer Vakuummesszelle, wobei der Ringmagnet und / oder die dem Pol zugehörigen weichmagnetischen Leitmittel innerhalb der Anordnung des Joches in axialer Richtung asymmetrisch und / oder verschiebbar angeordnet ist,
- Fig. 5a: in der Aufsicht eine Darstellung eines Segmentes als Teil eines zusammengesetzten Ringmagneten bei welchem die Magnetisierungsrichtung senkrecht zur Sehne des Segmentes ausgerichtet ist,
- Fig. 5b: in der Aufsicht eine Darstellung eines Segmentes als Teil eines zusammengesetzten Ringmagneten mit radial gerichteter Magnetisierungsrichtung,
- Fig. 5c: in der Aufsicht eine Teildarstellung eines aus einzelnen Stabmagneten zusammengesetzten Ringmagneten, wobei die einzelnen Stabmagnete in gleicher Richtung magnetisiert sind,
- Fig. 6a: im Querschnitt eine weitere Ausbildung einer Vakuummesszelle, wobei zwei voneinander axial beabstandete Ringmagnete innerhalb der Anordnung des Joches dargestellt sind,
- Fig. 6b: im Querschnitt eine weitere Ausbildung einer Vakuummesszelle, wobei je ein weiterer Ringmagnet mit axialer Polarisierung beidseitig des Poles des radial magnetisierten Ringmagneten und zueinander gegenpolig und gegen die Achse hin gerichtet innerhalb der Anordnung des Joches angeordnet sind.

Eine erste Ausführungsform einer Ionisations - Vakuummesszelle 30 mit einer Magnetron - Magnetfeldanordnung 19, gemäss der Erfindung, ist beispielsweise in der Figur 2a schematisch und im Querschnitt dargestellt.

Ein Gehäuse 10 weist einen Messanschluss 8 auf und dieser kann mit dem zu messende Vakuum verbunden werden, wodurch das Gehäuse 10 entsprechend evakuiert wird. Die Verbindung zwischen diesem Gehäuse 10 und dem Behälter mit dem zu messenden Vakuum kann beispielsweise über einen dichtenden Flansch erfolgen. Die Vakuummesszelle 30 umfasst das Gehäuse 10, mit zwei Elektroden 3, 4 und einem Magnetsystem 19, wobei in der vorliegenden Ausführung das Gehäuse 10 diese umschliessen. Das Magnetsystem 19 beinhaltet einen Permanentmagnetring 1 und ein Joch 2 aus weichmagnetischem Material. Das weichmagnetische Material kann sowohl metallische Werkstoffe (ferromagnetische), wie auch keramische Werkstoffe, wie beispielsweise Ferrite, umfassen. Die erste und eine zweite Elektrode 3, 4 sind im wesentlichen koaxial und beabstandet zueinander angeordnet und weisen eine gemeinsame Achse 7 auf. Hierdurch wird zwischen diesen beiden Elektroden eine Messkammer 20 ausgebildet. Diese wiederum ist mit dem Messanschluss 8 kommunizierend angeordnet. Die erste Elektrode 3 bildet die äussere Elektrode und weist im wesentlichen eine zylindrische Fläche auf. Die zweite Elektrode 4 kann ebenfalls zylindrisch ausgebildet sein, ist aber mit Vorteil stabförmig ausgebildet und ist mit Vorteil im Zentrum, in der Achse 7 liegend, angeordnet.

Beide Elektroden können über vakuumdichte, elektrische Durchführungen 12, 12' am Gehäuse 10 elektrisch gespiesen werden. Hierzu wird eine Spannungsquelle 16 mit den Elektroden 2, 3 verbunden. Strommessmittel 17 dienen der Auswertung eines Entladungsstromes, der Entladung, die ausgebildet wird zwischen den Elektroden 3, 4. Dieser Entladungsstrom entspricht einer Funktion des zu messenden Vakuumdruckes und wird elektronisch ausgewertet und der weiteren Verwendung zugeführt.

Mindestens ein Permanentmagnetring 1, umschliesst die koaxiale Anordnung der Elektroden 3, 4 mit im Wesentlichen radial zur Achse ausgerichteter Magnetisierungsrichtung 13. Dieser Permanentmagnetring 1 wird weiter von einem Joch 2 umschlossen, welches aus weichmagnetischem Material besteht zur Führung des magnetischen Feldes. Das Joch 2 ist in axialer Richtung beidseitig vom Permanentmagnetring 1 weg geführt und nach einem vorgegebenen Abstand d vom Permanentmagnetring 1 auf beiden Seiten in radialer Richtung hin zur Achse 7 und der ersten Elektrode 3 geführt. Dadurch entsteht im Querschnitt eine Art U-förmiges Joch, welches beidseitig und beabstandet vom Permanentmagnetring 1 Pole 9a und 9b ausbildet. Hierbei ist die erste Elektrode 3 die aussen liegende Elektrode der koaxialen Anordnung der Elektroden 3, 4. Mindestens ein Teil der Feldlinien des Permanentmagnetringes 1, die Nutzfeldlinien 14 welche für die Entladung bestimmend sind, schliessen sich somit über dem Pol des Permanentmagnetringes 1 und dem jeweiligen Pol 9a, 9b des Joches 2 innerhalb der Messkammer 20, die erste Elektrode 3 durchdringend, wobei vorzugsweise ein ringförmiges tunnelartiges Magnetfeld 14 über der ersten Elektrode 3 innerhalb der Messkammer 20 ausgebildet wird. Bei der Anordnung gemäss der Figur 1a werden beidseitig des Permanentmagnetringes 1 je ein tunnelartiges Magnetfeld 14 gebildet, also zwei ringförmige bzw. torusförmige Magnetfelder 14 mit entgegengesetzter Polarität des Feldlinienverlaufes.

Die aussen liegende erste Elektrode 3 wird vorzugsweise als Kathode betrieben und die innen liegende zweite Elektrode 4 als Anode.

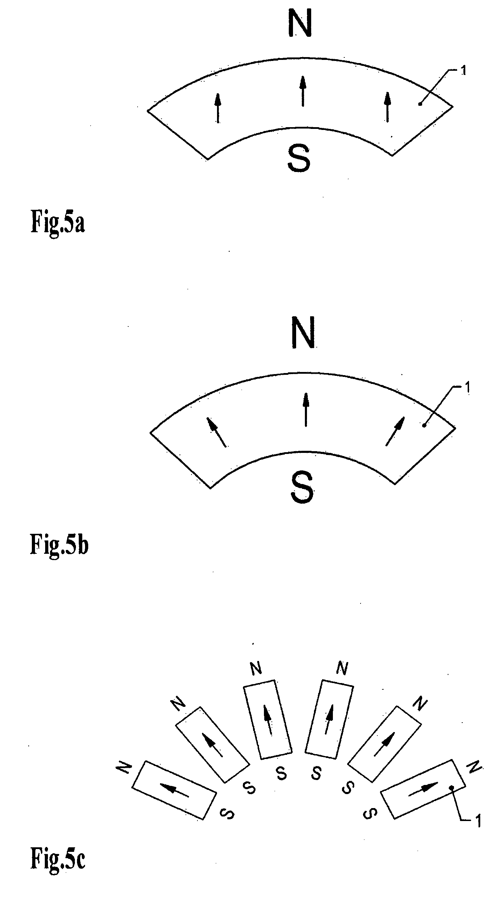

Der Permanentmagnetring 1 ist in radialer Richtung magnetisiert und enthält vorzugsweise Magnetmaterial der Gruppe seltener Erden, wie Neodym, Samarium etc. Um die Herstellung zu vereinfachen kann der Ring auch aus einzelnen Teilen zusammengesetzt werden, wie aus Segmenten und / oder einzelnen rechteckförmigen Magneten, die dann ringförmig aneinander gereiht werden, wie dies in den Figuren 5a bis 5c gezeigt ist. Die Magnetisierung erfolgt in der angegebenen Pfeilrichtung, im Fall des Segmentes der Figur 5a in gleichförmiger Richtung oder im Fall des Segmentes der Figur 5b in radialer Richtung. Im Fall der Figur 5c werden einzelne, beispielsweise rechteckförmige Magnete ringförmig aneinander gereiht. Die Länge h ist dann vorzugsweise länger als breit beim einzelnen Stück. Die Dikke des Magnetringes 1 ist vorzugsweise nicht grösser als die Breite h.

Die Form des U - förmigen Joches 2 ist in Schnittebene in der die Achse 7 liegt mindestens teilweise abgewinkelt ausgebildet, derart dass in axialer Richtung im Abstand d beidseitig zum Permanentmagnetring 1 die dadurch entstehenden Schenkel des Joches 2 in radialer Richtung zur Achse 7 der Messzelle 30 hin weisen und dort beidseitig je einen ringförmigen Pol 9a, 9b ausbilden, der gegen die erste Elektrode 3 hin geführt ist. Vorzugsweise ist die Abwinkelung rechtwinklig ausgebildet, wie dies in den Figuren 2a bis 2d, 3, 4 und 6 dargestellt ist. Die Pole 9a, 9b des Joches und der innen liegende Pol des Permanentmagnetringes sind gegenüber der Achse 7 vorzugsweise gleich beabstandet. Diese können aber in gewissen Fällen gegeneinander versetzt sein, wie dies beispielsweise in der Figur 2b dargestellt ist. Dort ist beispielsweise der eine Pol 9b des Joches 2, im unteren Bereich, gegen die Achse 7 hin geführt. Es ist von Vorteil wenn alle Pole möglichst nahe im Bereich der ersten Elektrode 3 liegend angeordnet sind, um das magnetische Feld optimal führen und nutzen zu können. Bevorzugt sind die Pole 9a, 9b des Joches derart angeordnet, dass dort das magnetische Feld 14 durch die erste Elektrode 3 hindurchtritt. Das magnetische Nutzfeld 14 führt somit vom Pol des Permanentmagnetringes 1 weg durch die erste Elektrode 3 hindurch und schliesst sich bogenförmig innerhalb der Messkammer 20 über den beiden Polen 9a, 9b des Joches 2, indem es dort wiederum durch die erste Elektrode 3 hindurch geführt ist. Das Hindurchführen des magnetischen Feldes durch die erste Elektrode 3 führt zu einer hohen Effizienz der Entladung. In gewissen Fällen kann einer oder beide Pole 9a, 9b des Joches 2 auch derart angeordnet sein, dass die Feldlinien 14 nur teilweise oder gar nicht durch die erste Elektrode 3 hindurchtreten, wie dies beispielsweise in der Figur 2b im oberen Bereich für den einen Pol 9a gezeigt ist. Im unteren Teil der Figur 2b ist die erste Elektrode 3 gegen die Achse hin abgewinkelt dargestellt, derart dass auch dort die Feldlinien 14 wiederum durch die erste Elektrode 3 hindurchtreten. Es ist von Vorteil wenn diese Abwinkelung beidseitig der zylinderförmigen ersten Elektrode 3 erfolgt. In diesem Fall bildet die erste Elektrode 3 eine Art geschlossenen Zylinder der nur noch eine Öffnung 8 aufweist für die Zuführung des Messgases P und allenfalls Mittel zur Halterung der zweiten Elektrode innerhalb dieses Zylinders mit einer elektrischen Durchführung zur Speisung der zweiten Elektrode.

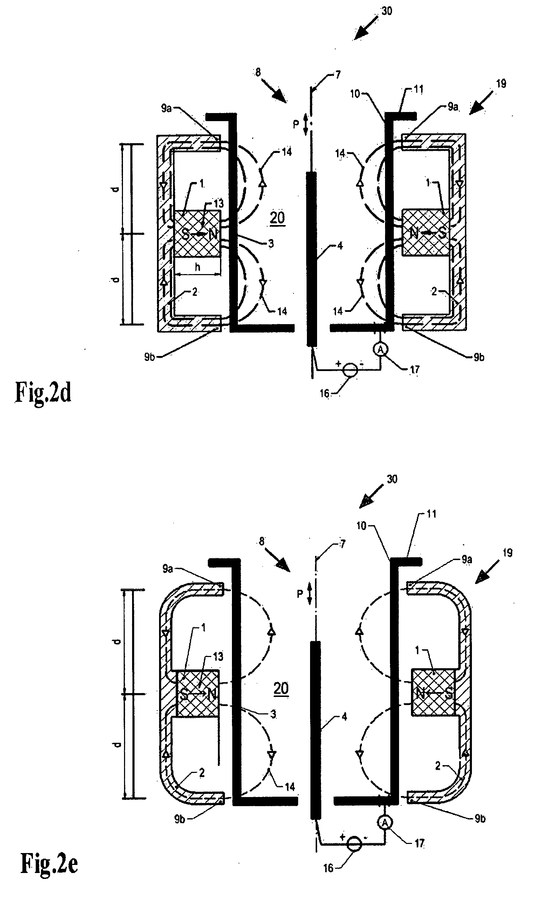

Neben der abgewinkelten Ausbildung der Schenkel des Joches 2 können mindestens Teile davon auch mindestens teilweise bogenförmig in radialer Richtung zur ersten Achse 7 oder zur Elektrode 3 hin geführt sein, wie dies in der Figur 2e dargestellt ist.

Im gezeigten Beispiel der Figur 2a sind die Elemente der Messzelle 30, das Magnetsystem 19 und die beiden Elektroden 3, 4 von einem vakuumdichten Gehäuse 10 umschlossen. Dieses Gehäuse 10 besitzt eine Öffnung 8 und einen Anschluss 11, vorzugsweise als Flansch ausgebildet, womit die Messzelle 30 mit dem zu messenden Vakuumvolumen kommunizierend, dichtend verbunden werden kann.

Diese Verbindung ist mit Vorteil als lösbare Verbindung ausgebildet, wodurch die Messzelle 30 als Komponente einfach austauschbar behandelt werden kann.

Eine weitere mögliche Ausbildung der Messzelle 30 mit dem Gehäuse 10 ist in der Figur 2b dargestellt. Hierbei ist das Joch 2 des Magnetsystems gleichzeitig als vakuumdichtes Gehäuse 10 mit daran angeordneten Verbindungsmitteln 11 ausgebildet. Das Joch 2 kann auch nur Teil des Gehäuse 10 sein. In diesem Fall kann das Gehäuse 10 zum Teil aus weichmagnetischem oder ferromagnetischem Material hergestellt werden und zum anderen Teil aus nicht magnetischem Material, wie beispielsweise aus Inox.

In einer weiteren Variante, gemäss der Figur 2c, kann das Gehäuse 10 zwischen der ersten Elektrode 3 und dem Magnetsystem 19 angeordnet werden, derart dass das Magnetsystem ausserhalb des Vakuum einschliessenden Gehäuse 10 zu liegen kommt. Dies hat den Vorteil, dass die Materialien des Magnetsystems 19 den Raum der Messkammer 20 nicht verunreinigen bzw. kontaminieren können, wodurch das Messresultat ungünstig beeinflusst werden könnte.

In der Variante nach der Figur 2d ist dargestellt, dass die erste Elektrode 3 gleichzeitig auch als vakuumdichtes Gehäuse 10 ausgebildet werden kann. Dies ermöglicht ebenfalls das Magnetsystem 19 vakuumtechnisch von der Messkammer 20 zu separieren und ausserdem eine kompakte, einfache Ausführung der Messzelle 30.

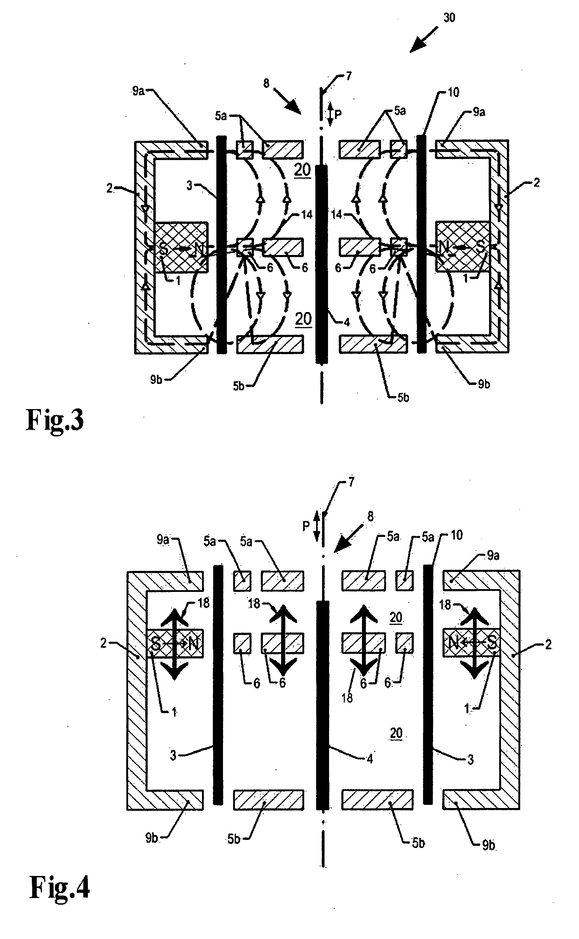

Der Permanentmagnetring 1 kann innerhalb des Joches 2 zwischen dessen Schenkeln mit den beiden Polen 9a, 9b in axialer Richtung asymmetrisch angeordnet werden oder gar verschiebbar, wie dies in der Figur 4 dargestellt ist mit den Pfeilen 18, die die Bewegungsrichtung angeben. Hiermit können die Eigenschaften der Magnetanordnung und somit der Entladung gezielt beeinflusst werden oder auch Ungleichmässigkeiten korrigiert werden. In den meisten und bevorzugten Fällen wird der Permanentmagnetring 1 gegenüber den Polen 9a, 9b des Joches 2 zentrisch angeordnet, so dass die Pole 9a, 9b des Joches 2 gegenüber dem Permanentmagnetring 1 symmetrisch angeordnet sind.

Das Magnetfeld, welches von den Polen ausgehend nach innen gerichtet ist kann mit zusätzlichen Leitmitteln beeinflusst werden, um die Entladung weiter zu optimieren. Beispielsweise können in radialer Richtung gegen die Achse 7 hin gerichtet, im Bereich des innen liegenden Poles des Permanentmagnetringes (1), ferromagnetische Leitmittel 6 angeordnet werden, wie dies in den Figuren 3 und 4 dargestellt ist. Auch können beispielsweise in radialer Richtung gegen die Achse 7 hin gerichtet, im Bereich von mindestens einem der innen liegenden Pole 9a, 9b des Joches 2, ferromagnetische Leitmittel 5a, 5b angeordnet werden. Derartige Leitmittel können als Blechteile und / oder Platten aus weichmagnetischem bzw. ferromagnetischem Material gefertigt sein, die beispielsweise scheibenförmig ausgebildet sind. Je nach Bedarf sind darin Öffnungen vorgesehen, um die zweite Elektrode 4 hindurchzuführen und / oder den Gasaustausch zu ermöglichen.

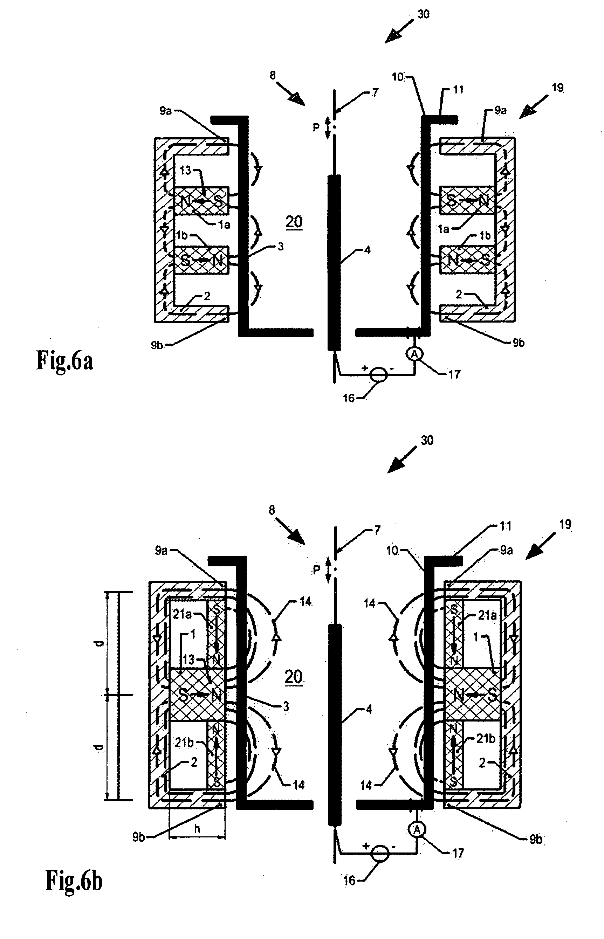

Eine weitere Ausführungsform des Magnetsystems 19 ist in der Figur 6a dargestellt, bei welcher zwei Permanentmagnetringe 1, voneinander axial beabstandet und gegenpolig, innerhalb des Joches 2 angeordnet sind. Diese Anordnung erzeugt ein besonders kräftiges ringförmiges Magnetron Feld zwischen den beiden Polen der Permanentmagnetringe 1 über der ersten Elektrode 3 innerhalb der Messkammer 20. Beidseitig dazu verlaufen dann je ein weiteres ringförmiges Feld, die von den beiden Polen 9a, 9b des Joches 2 abgeschlossen werden und dadurch nach aussen tretende Streufelder vermieden werden. Es ist, bei Bedarf, ohne weiteres auch möglich mehr als zwei Permanentmagnetringe 1 zu verwenden, dessen Polung jeweils alternierend angeordnet ist, auch wenn zwei Permanentmagnetringe 1 bevorzugt sind.

Eine weitere Ausführung des Magnetsystems 19 ist in der Figur 6b dargestellt. Zwischen den Schenkeln und den Polen 9a, 9b des Joches 2 und dem Permanentmagnetring 1 ist je ein weiterer Ringmagnet 21a, 21b angeordnet der in axialer Richtung magnetisiert ist und die innerhalb des Magnetsystems im Bereich gegen die Achse 7 hin angeordnet sind. Vorzugsweise beträgt die Dicke des Magnetringes 21 in radialer Richtung höchstens die Hälfte der Breite h des Permanentmagnetringes 1. Mit dieser Anordnung können sehr hohe Flussdichten des Magnetfeldtunnels über der ersten Elektrode 3 erzielt werden. Selbstverständlich kann ein solcher Ringmagnet 21, mit Vorteil, auch zwischen zwei Permanentmagnetringen 1 angeordnet werden entsprechend der zuvor beschriebenen Ausführung gemäss der Figur 6a.

Die Messzelle 30, gemäss der zuvor beschriebenen Erfindung, wird beispielsweise mit einer Spannung von 3.3 kV betrieben zwischen den beiden Elektroden 3, 4, also zwischen Kathode 3 und Anode 4. Der Bevorzugte Bereich für den Betrieb der Messzelle 30 liegt zwischen 2.0 kV und 4.5 kV.

Nachfolgend werden Dimensionen angegeben für die wichtigen Teile.

Die zweite Elektrode 4 (Anode):
- Länge der Anode: beispielsweise 20 mm, mit dem bevorzugten Bereich von 10 bis 30 mm.
- Durchmesser der Anode: beispielsweise 1.0 bis 1.5 mm, mit dem bevorzugten Bereich von 1.0 bis 5.0 mm.
- Material: nicht magnetisch (auch para- oder diamagnetisch).

Die erste Elektrode 3 (Kathode):
- Länge der Kathode: beispielsweise 20 mm, mit dem bevorzugten Bereich von 10 bis 30 mm.
- Durchmesser der Kathode: beispielsweise 20 bis 25 mm, mit dem bevorzugten Bereich von 15 bis 35 mm.
- Material: nicht magnetisch (auch para- oder diamagnetisch).

Der Permanentmagnetring 1:
- Höhe in axialer Richtung: beispielsweise 5.0 mm, mit dem bevorzugten Bereich von 3.0 bis 10 mm.
- Breite h in radialer Richtung: beispielsweise 5.0 mm, mit dem bevorzugten Bereich von 3.0 bis 10 mm.

### Magnetfeld:

Die Flussdichte auf der Zylinderachse, gemessen innerhalb der Messkammer in axialer Richtung, liegt im Bereich von 10 mT (milli Tesla) bis 300 mT, vorzugsweise im Bereich von 60 bis 130 mT.

### Streufeld 15:

- Kleiner 2.0 mT im Abstand von 30 mm in radialer Richtung von der Aussenkante der Messzelle 30, vorzugsweise kleiner 0.5 mT.
- Kleiner 2.0 mT im Abstand von 30 mm von der Vorder- oder Rückseitenkante in axialer Richtung der Messzelle 30, vorzugsweise kleiner 0.5 mT.

Das Streufeld kann in beiden Fällen als tiefste Werte nicht null Werte erreichen. Diese tiefsten erreichbaren Grenzwerte liegen im günstigsten Fall höchstens bei etwa 0.01 mT entsprechend 0.1 Gauss, was etwa in der Grössenordnung des Erdmagnetfeldes liegt gemessen an der Erdoberfläche.

## Patentansprüche

1. Eine Ionisations - Vakuummesszelle umfassend:
a) ein evakuierbares Gehäuse (10) mit einem Messanschluss (8) für das zu messende Vakuum,
b) eine erste und eine zweite Elektrode (3, 4), die im wesentlichen koaxial und beabstandet zueinander angeordnet sind und mit einer gemeinsamen Achse (7), wodurch zwischen diesen beiden Elektroden eine Messkammer (20) ausgebildet ist, die mit dem Messanschluss (8) kommunizierend angeordnet ist, wobei die erste Elektrode (3) die äussere Elektrode bildet und diese im wesentlichen eine zylindrische Fläche aufweist,
c) wobei die Elektroden (3, 4) mit einer Spannungsquelle (16) verbindbar sind und
d) zwischen den Elektroden (3, 4), ein Strommessmittel (17), zur Auswertung eines Entladungsstromes ausgebildet, anschliessbar ist, wobei dieser Entladestrom eine Funktion des zu messenden Vakuumdruckes bildet,
e) mindestens einen Permanentmagnetring (1), der die koaxiale Anordnung der Elektroden (3, 4) umschliesst, mit im wesentlichen radial zur Achse ausgerichteter Magnetisierungsrichtung (13) und mit einem diesen Permanentmagnetring (1) umschliessenden weichmagnetischen Joch (2),
**dadurch gekennzeichnet, dass** das Joch (2) in axialer Richtung beidseitig vom Permanentmagnetring (1) weg geführt ist und nach einem vorgegebenen Abstand (d) vom Permanentmagnetring (1) auf beiden Seiten in radialer Richtung zur Achse (7) und der ersten Elektrode (3) hin geführt ist, wobei diese erste Elektrode (3) die aussen liegende Elektrode der koaxialen Anordnung der Elektroden (3, 4) bildet, derart dass das Joch (2) beidseitig und beabstandet vom Permanentmagnetring (1) zwei ringförmige Pole (9a, b) ausbildet über welche mindestens ein Teil der Feldlinien des Permanentmagnetringes (1) sich innerhalb der Messkammer (20), die erste Elektrode (3) durchdringend, schliessen, wobei vorzugsweise ein ringförmiges tunnelartiges Magnetfeld (14) über der ersten Elektrode (3) innerhalb der Messkammer (20) ausgebildet ist.

2. Messzelle nach Anspruch 1, **dadurch gekennzeichnet, dass** die äussere Elektrode (3) eine Kathode ist und die innere Elektrode (4) eine Anode ist.

3. Messzelle nach einem der vorhergehenden Ansprüche, **dadurch gekennzeichnet, dass**, in einer Schnittebene, die in der die Achse (7) liegt. das Joch (2) mindestens teilweise bogenförmig in radialer Richtung zur ersten Elektrode (3) hin geführt ist.

4. Messzelle nach einem der vorhergehenden Ansprüche, **dadurch gekennzeichnet, dass,** in einer Schnittebene in der die Achse (7) liegt, das Joch (2) mindestens teilweise abgewinkelt, vorzugsweise rechtwinklig, in radialer Richtung zur ersten Elektrode (3) hin geführt ist.

5. Messzelle nach einem der vorhergehenden Ansprüche, **dadurch gekennzeichnet, dass** innerhalb des Joches (2) mit den beiden Polen (9a, b) in axialer Richtung voneinander beabstandet mindestens zwei Permanentmagnetringe (1) mit entgegengesetzter Magnetisierungsrichtung (13) angeordnet sind, wobei jedes Permanentmagnetring - Paar ein weiteres ringförmiges und tunnelartiges Magnetfeld (14) über der ersten Elektrode (3) ausbildet.

6. Messzelle nach Anspruch 5, **dadurch gekennzeichnet, dass** innerhalb des Joches (2) mit den beiden Polen (9a, b) in axialer Richtung voneinander beabstandet zwei Permanentmagnetringe (1) mit entgegengesetzter Magnetisierungsrichtung (13) angeordnet sind.

7. Messzelle nach einem der vorhergehenden Ansprüche, **dadurch gekennzeichnet, dass** das Gehäuse (10) sowohl den Permanentmagnetring (1) mit dem Joch (2) als auch die beiden Elektroden (3, 4) umschliesst.

8. Messzelle nach Anspruch 7, **dadurch gekennzeichnet, dass** das Joch (2) Teil des Gehäuse (10) bildet.

9. Messzelle nach einem der vorhergehenden Ansprüche 1 bis 6, **dadurch gekennzeichnet, dass** das Gehäuse (10) zwischen der ersten Elektrode (3) und dem Permanentmagnetring (1) mit dem Joch (2) angeordnet ist derart, dass der Permanentmagnetring (1) und das Joch (2) vom Vakuum getrennt angeordnet ist.

10. Messzelle nach einem der vorhergehenden Ansprüche 1 bis 6, **dadurch gekennzeichnet, dass** die erste Elektrode (3) als Gehäuse (10) ausgebildet ist.

11. Messzelle nach einem der vorhergehenden Ansprüche, **dadurch gekennzeichnet, dass** der mindestens eine Permanentmagnetring (1) in axialer Richtung innerhalb des Joches (2) gegenüber den Polen (9a, b) ungleich beabstandet angeordnet ist.

12. Messzelle nach einem der vorhergehenden Ansprüche, **dadurch gekennzeichnet, dass** der mindestens eine Permanentmagnetring (1) in axialer Richtung innerhalb des Joches (2) gegenüber den Polen (9a, b) verschieblich angeordnet ist.

13. Messzelle nach einem der vorhergehenden Ansprüche, **dadurch gekennzeichnet, dass** in radialer Richtung gegen die Achse (7) hin gerichtet, im Bereich des innen liegenden Poles des Permanentmagnetringes (1), weichmagnetische Leitmittel (6) angeordnet sind.

14. Messzelle nach einem der vorhergehenden Ansprüche, **dadurch gekennzeichnet, dass** in radialer Richtung gegen die Achse (7) hin gerichtet, im Bereich von mindestens einem der innen liegenden Pole (9a, b) des Joches (2), ferromagnetische Leitmittel (5a, 5b) angeordnet sind.

15. Messzelle nach einem der vorhergehenden Ansprüche 13 oder 14, **dadurch gekennzeichnet, dass** die weichmagnetischen Leitmittel (6, 5a, 5b) scheibenförmig ausgebildet sind.

16. Messzelle nach einem der vorhergehenden Ansprüche 13 bis 15, **dadurch gekennzeichnet, dass** die ferromagnetischen Leitmittel (6, 5a, 5b) Öffnungen aufweisen zur Hindurchführung der zweiten Elektrode (4) und / oder für den Messgasdurchlass.

17. Messzelle nach einem der vorhergehenden Ansprüche, **dadurch gekennzeichnet, dass** die zweite Elektrode (4) stabförmig ausgebildet ist.

## Claims

1. An ionization vacuum measurement cell comprising:
a) an evacuatable housing (10) with a measurement connection (8) for the vacuum to be measured,
b) a first and second electrode (3, 4) having a common axis (7) and arranged substantially coaxially and spaced apart to each other, whereby a measurement chamber (20) is formed between these two electrodes, which is arranged in communication with the measurement connection (8), wherein the first electrode (3) forms the outer electrode comprising a substantially cylindrical surface,
c) wherein the electrodes (3, 4) are connectable to a voltage source (16), and
d) a current measurement means (17) is connectable between the electrodes (3, 4) for evaluating a discharge current, the discharge current being a function of the vacuum pressure to be measured,
e) at least one permanent magnet ring (1) surrounding the coaxial arrangement of the electrodes (3, 4), having a magnetisation direction (13) which is substantially radial to the axis, and with a soft-magnetic yoke (2) surrounding the permanent magnet ring (1),
**characterised in that** said yoke (2) extends axially away from the permanent magnet ring (1) on both sides, and extends in a radial direction to the axis (7) and the first electrode (3) on both sides at a predetermined distance (d) from the permanent magnet ring (1), wherein said first electrode (3) forms the outer electrode of the coaxial arrangement of the electrodes (3, 4), such that the yoke (2) forms two annular poles (9a, b) on both sides of the permanent magnet ring (1) and spaced apart therefrom, through which at least a part of the field lines of the permanent magnet ring (1) form a closed loop within the measurement chamber (20), penetrating the first electrode (3), wherein preferably an annular tunnel-like magnetic field (14) is generated above the first electrode (3) inside the measurement chamber (20).

2. The measurement cell according to claim 1, **characterised in that** the outer electrode (3) is a cathode and the inner electrode (4) is an anode.

3. The measurement cell according to one of the preceding claims, **characterised in that** the yoke (2) is at least partially arcuately directed towards the first electrode (3) in a radial direction in a sectional plane in which the axis (7) lies.

4. The measurement cell according to one of the preceding claims, **characterised in that** the yoke (2) is at least partially angled, preferably orthogonally, directed towards the first electrode (3) in a radial direction in a sectional plane in which the axis (7) lies.

5. The measurement cell according to one of the preceding claims, **characterised in that** at least two permanent magnet rings (1) having opposite directions of magnetisation (13) are arranged inside the yoke (2) with both poles (9a, b) spaced apart from each other in axial direction, wherein each permanent magnet ring pair forms a further annular and tunnel-like magnetic field (14) above the first electrode (3) .

6. The measurement cell according to claim 5, **characterised in that** two permanent magnet rings (1) having opposite directions of magnetisation (13) are arranged inside the yoke (2) with both poles (9a, b) spaced apart from each other in axial direction.

7. The measurement cell according to one of the preceding claims, **characterised in that** the housing (10) encloses the permanent magnet ring (1) comprising the yoke (2) as well as both electrodes (3, 4).

8. The measurement cell according to claim 7, **characterised in that** the yoke (2) forms part of the housing (10).

9. The measurement cell according to one of claims 1 to 6, **characterised in that** the housing (10) is arranged between the first electrode (3) and the permanent magnet ring (1) with the yoke (2) such that the permanent magnet ring (1) and the yoke (2) are arranged separated from the vacuum.

10. The measurement cell according to one of claims 1 to 6, **characterised in that** the first electrode (3) is formed as the housing (10).

11. The measurement cell according to one of the preceding claims, **characterised in that** the at least one permanent magnet ring (1) is arranged in axial direction inside the yoke (2) spaced apart unequally in relation to the poles (9a, b).

12. The measurement cell according to one of the preceding claims, **characterised in that** the at least one permanent magnet ring (1) is arranged in axial direction inside the yoke (2) displaceably in relation to the poles (9a, b).

13. The measurement cell according to one of the preceding claims, **characterised in that** soft-magnetic conductive means (6) are arranged in the area of the inner pole of the permanent magnet ring (1) directed in radial direction towards the axis (7).

14. The measurement cell according to one of the preceding claims, **characterised in that** ferromagnetic conductive means (5a, 5b) are arranged in the area of at least one of the inner poles (9a, b) of the yoke (2) directed in radial direction towards the axis (7).

15. The measurement cell according to claim 13 or 14, **characterised in that** the soft-magnetic conductive means (6, 5a, 5b) are formed disk-like.

16. The measurement cell according to one of the claims 13 to 15, **characterised in that** the ferromagnetic conductive means (6, 5a, 5b) feature openings for feeding-through the second electrode (4) and/or to allow passage of measurement gas.

17. The measurement cell according to one of the preceding claims, **characterised in that** the second electrode (4) is formed rod-like.

## Revendications

1. Cellule d'ionisation sous vide comprenant:
a) un boîtier (10) dans lequel un vide peut être établi avec un raccord de mesure (8) pour le vide à mesurer,
b) une première et une deuxième électrode (3, 4) disposées de façon essentiellement coaxiale et espacées l'une de l'autre et avec un axe commun (7), une chambre de mesure (20) qui communique avec le raccord de mesure (8) étant agencée entre ces deux électrodes, la première électrode (3) formant l'électrode extérieure et présentant une surface essentiellement cylindrique,
c) les électrodes (3, 4) pouvant être raccordées à une source de tension (16) et
d) un moyen de mesure d'intensité (17) conçu pour évaluer un courant de décharge et pouvant être raccordé entre les électrodes (3, 4), ce courant de décharge formant une fonction de la pression sous vide à mesurer,
e) au moins un anneau d'aimants permanents (1) qui entoure l'agencement coaxial des électrodes (3, 4), avec une direction d'aimantation (13) orientée essentiellement radialement par rapport à l'axe et avec une culasse (2) en matériau magnétique doux qui entoure ledit anneau d'aimants permanents (1),
**caractérisé en ce que** la culasse (2) s'étend de façon à s'éloigner de l'anneau d'aimants permanents (1) des deux côtés dans le sens axial et, après une distance prédéfinie (d) par rapport à l'anneau d'aimants permanents (1), elle s'étend des deux côtés dans le sens radial en direction de l'axe (7) et de la première électrode (3), cette première électrode (3) formant l'électrode extérieure de l'agencement coaxial des électrodes (3, 4), de telle sorte que la culasse (2) forme, des deux côtés et à distance de l'anneau d'aimants permanents (1), deux pôles annulaires (9a, b) par le biais desquels au moins une partie des lignes de champ de l'anneau d'aimants permanents (1) se ferment à l'intérieur de la chambre de mesure (20) en traversant la première électrode (3), un champ magnétique (14) annulaire en forme de tunnel étant réalisé de préférence sur la première électrode (3) à l'intérieur de la chambre de mesure (20).

2. Cellule de mesure selon la revendication 1, **caractérisée en ce que** l'électrode extérieure (3) est une cathode et l'électrode intérieure (4) est une anode.

3. Cellule de mesure selon l'une des revendications précédentes, **caractérisée en ce que**, dans un plan de coupe dans lequel se situe l'axe (7), la culasse (2) s'étend au moins partiellement en forme d'arc dans le sens radial en direction de la première électrode (3).

4. Cellule de mesure selon l'une des revendications précédentes, **caractérisée en ce que**, dans un plan de coupe dans lequel se situe l'axe (7), la culasse (2) s'étend au moins partiellement courbée, de préférence à angle droit, dans le sens radial en direction de la première électrode (3) .

5. Cellule de mesure selon l'une des revendications précédentes, **caractérisée en ce que**, à l'intérieur de la culasse (2) avec les deux pôles (9a, b) il est agencé au moins deux anneaux d'aimants permanents (1) à distance l'un de l'autre dans le sens axial avec une direction d'aimantation opposée (13), chaque paire d'anneaux d'aimants permanents formant un autre champ magnétique (14) annulaire et en forme de tunnel sur la première électrode (3) .

6. Cellule de mesure selon la revendication 5, **caractérisée en ce qu'**à l'intérieur de la culasse (2), avec les deux pôles (9a, b), il est agencé deux anneaux d'aimants permanents (1) à distance l'un de l'autre dans le sens axial avec une direction d'aimantation (13) opposée.

7. Cellule de mesure selon l'une des revendications précédentes, **caractérisée en ce que** le boîtier (10) renferme aussi bien l'anneau d'aimants permanents (1) avec la culasse (2) que les deux électrodes (3, 4).

8. Cellule de mesure selon la revendication 7, **caractérisée en ce que** la culasse (2) fait partie du boîtier (10).

9. Cellule de mesure selon l'une des revendications 1 à 6, **caractérisée en ce que** le boîtier (10) est agencé entre la première électrode (3) et l'anneau d'aimants permanents (1) avec la culasse (2) de telle façon que l'anneau d'aimants permanents (1) et la culasse (2) sont agencés séparés du vide.

10. Cellule de mesure selon l'une des revendications 1 à 6, **caractérisée en ce que** la première électrode (3) est réalisée en tant que boîtier (10).

11. Cellule de mesure selon l'une des revendications précédentes, **caractérisée en ce que** le au moins un anneau d'aimants permanents (1) est agencé dans le sens axial à l'intérieur de la culasse (2) de manière non équidistante par rapport aux pôles (9a, b).

12. Cellule de mesure selon l'une des revendications précédentes, **caractérisée en ce que** le au moins un anneau d'aimants permanents (1) est agencé dans le sens axial à l'intérieur de la culasse (2) mobile par rapport aux pôles (9a, b).

13. Cellule de mesure selon l'une des revendications précédentes, **caractérisée en ce que**, orienté dans le sens radial par rapport à l'axe (7), dans la zone du pôle intérieur de l'anneau d'aimants permanents (1), il est agencé des conducteurs magnétiques doux (6).

14. Cellule de mesure selon l'une des revendications précédentes, **caractérisée en ce que**, orienté dans le sens radial par rapport à l'axe (7), dans la zone d'au moins un des pôles intérieurs (9a, b) de la culasse (2), il est agencé des conducteurs ferromagnétiques (5a, b).

15. Cellule de mesure selon l'une des revendications 13 ou 14, **caractérisée en ce que** les conducteurs magnétiques doux (6, 5a, 5b) sont réalisés en forme de disque.

16. Cellule de mesure selon l'une des revendications 13 à 15, **caractérisée en ce que** les conducteurs ferromagnétiques (6, 5a, 5b) présentent des ouvertures pour introduire la deuxième électrode (4) et/ou pour le passage du gaz de mesure.

17. Cellule de mesure selon l'une des revendications précédentes, **caractérisée en ce que** la deuxième électrode (4) est réalisée en forme de barre.
